Europäisches Patentamt

European Patent Office

Office européen des brevets

(19)

(11)  **EP 1 351 458 B1**

(12)  **EUROPEAN PATENT SPECIFICATION**

(45) Date of publication and mention
of the grant of the patent:
**19.10.2005  Bulletin 2005/42**

(51) Int Cl.⁷: **H04L 12/56**, H04Q 11/04

(21) Application number: **03006429.9**

(22) Date of filing: **21.03.2003**

(54) **Shared wavelength group to differentiate label switched paths for congestion control in optical burst switching networks**

Gruppe gemeinsamer Wellenlängen zur Unterscheidung von Etikettvermittlungswegen zur Überlastregelung in Netzen mit optischer Burstvermittlung in Zeitschlitzen

Groupe de longueurs d'ondes partagées pour distinguer des chemins à communication d'etiquettes dans des réseaux optiques avec commutation en rafale

(84) Designated Contracting States:
**AT BE BG CH CY CZ DE DK EE ES FI FR GB GR HU IE IT LI LU MC NL PT RO SE SI SK TR**

(30) Priority:  **03.04.2002  US 115378**

(43) Date of publication of application:
**08.10.2003  Bulletin 2003/41**

(73) Proprietor: **ALCATEL**
**75008 Paris (FR)**

(72) Inventors:
• **Ozugur, Timucin**
**Garland, TX 75042 (US)**
• **Verchere, Dominique**
**91650 Breuillet (FR)**

(74) Representative: **Rausch, Gabriele et al**
**Alcatel**
**Intellectual Property Department, Stuttgart**
**70430 Stuttgart (DE)**

(56) References cited:
**WO-A-01/65887**          **US-A- 5 457 687**

• **XU L ET AL: "TECHNIQUES FOR OPTICAL PACKET SWITCHING AND OPTICAL BURST SWITCHING" IEEE COMMUNICATIONS MAGAZINE, IEEE SERVICE CENTER. PISCATAWAY, N.J, US, vol. 39, no. 1, 1 January 2001 (2001-01-01), pages 136-142, XP001006844 ISSN: 0163-6804**
• **INTERNATIONAL TELECOMMUNICATION UNION: "INTEGRATED SERVICES DIGITAL NETWORK (ISDN) OVERALL NETWORK ASPECTS AND FUNCTIONS TRAFFIC CONTROL AND CONGESTION CONTROL IN B-ISDN " ITU-T I.317: TRAFFIC CONTROL AND CONGESTION CONTROL IN B-ISDN, [Online] vol. I, no. 371, - March 2000 (2000-03) pages 1-1-113, XP002244686 Geneva Retrieved from the Internet: <URL:http://www.ihserc.com/cgi-bin/dodiss2 ?201=963141234600000001878800370753016040 27 700015271608809813742019​31&sess=4721170​9 6& prod=SPECS2&27=3&99=LEMMNAAAAAAAAA AA&200=d isrpt&25=5> [retrieved on 2003-06-18]**

## Description

BACKGROUND OF THE INVENTION

<u>Technical Field of the Invention</u>

The present invention generally relates to optical burst switching ("OBS") networks. More particularly, and not by way of any limitation, the present invention is directed to use of shared wavelength groups ("SWGs") to differentiate Label Switched Paths ("LSPs") for congestion control in an OBS network.
A method of and an apparatus for identivying Label Switched Paths participating in an optical network according to the preamble of claim 1 and claim 6 are known from WO 0165887A. further prior art is known from US-A-5,457,687.

<u>Description of Related Art</u>

The demand for Internet services has increased dramatically over the past several years. This increase is at least partially due to the rapid development of Internet and wireless data applications and the introduction of high-speed Digital Subscriber Lines ("DSL"). To support this ever-increasing demand, the amount of raw bandwidth available at fiber optic backbone links has been increased by several orders of magnitude. In current optical Internet implementations, IP routers are interconnected via synchronous optical network ("SONET")interfaces and wave division multiplex ("WDM") links according to the digital wrapper standard set forth in ITU-T Recommendation G.709 "Network Node Interface for the Optical Transport Network" (hereinafter "G.709"). Data transmitted optically in this manner has to be switched electronically at each node, which dramatically reduces the efficiency of the optical network due to relatively slow electronic processing speed.

In an effort to eliminate the opto-electro-optic ("O/E/O") conversions, and thereby speed data transmission, next-generation optical systems are being designed as all-optical networks. The nodes of such an optical network avoid buffering, since there is currently no optical form of RAM available. Optical Wavelength Switching ("OWS") is a circuit-switched based optical network technology that dedicates the entire bandwidth of a specific wavelength to a specific data flow. Because the dedication must be torn down before another data flow uses it, utilization is poor. More recently, two additional optical network technologies, each of which comprises an improvement to OWS, have been developed. These technologies are Optical Packet Switching ("OPS") and Optical Burst Switching ("OBS"). OPS provides a high utilization; however, it suffers from a high hardware implementation complexity.

In contrast, OBS provides burst-based switching, which is different from OWS and an alternative to OPS. OBS provides a higher utilization than OWS with a moderate hardware implementation complexity. OBS is a viable solution to terabit backbone networks because it allows switching of data channels entirely in the optical domain and performs resource allocation in the electronic domain. An OBS control packet and corresponding data burst packet, which precedes the control packet, are launched from an edge router at time instants separated by a offset time. Each control packet contains the information, such as a label, the length of the burst, and the offset time, required to route the corresponding data burst through the optical core backbone. The control packet is sent via out-of-band in-fiber control channels and is processed electronically at the controller of each of the optical cross-connects to make routing decisions, such as selection of an outgoing fiber and wavelength. The optical cross-connects are configured to switch the data burst, which is expected to arrive after a designated offset time. The data burst is then switched entirely in the optical domain, thereby removing the electronic bottleneck in the end-to-end path between the edge routers.

In an OBS network, a significant problem is caused by collision, which occurs when burst packets contend for the same outgoing interface at each node. If another wavelength is available, the burst packet is converted to this wavelength using wavelength converters at the node. If no wavelengths or Fiber Delay Lines ("FDL") are available, one burst succeeds in being transmitted and the rest of the bursts are dropped. The probability of the occurrence of a blocking event is referred to as Burst Blocking Probability ("BBP"), or Burst Dropping Probability ("BDP"). It has been demonstrated that the BBP may be well over 10 percent for a fully-utilized OBS network, depending on the number of wavelengths at each interface without FDLs, which help to ease the burst dropping.

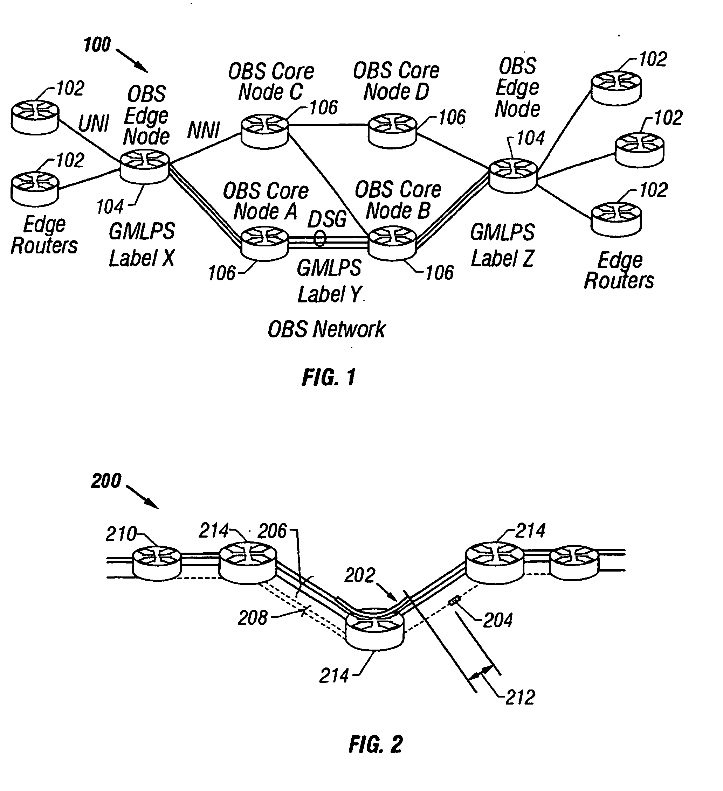

As best shown in FIG. 1, an OBS network 100 includes three primary components: one or more edge routers 102, one or more edge nodes 104, and one or more core nodes 106. Each edge router 102 is responsible for performing a burstification process in which many packets received from legacy interfaces, including, for example, "Packet over SONET" ("PoS"), Gigabit Ethernet, IP over ATM, and Frame Relay, are inserted into a burst packet. The edge nodes 104 and core nodes 106 have the same node architecture. The only difference between the nodes 104, 106, is in signaling; specifically, the edge nodes 104 are connected to the edge router 102 through a User-to-Network Interface ("UNI") and to the core nodes 106 through a Network-to-Network Interface ("NNI"). The edge nodes 104 may also support the interfacing to other networks, such as G. 709.

As previously indicated, OBS technology eliminates the O/E/O conversion for the burst packets; only the Burst Header Packet ("BHP") goes through O/E/O conversion. FIG. 2 is an alternative illustration of a portion of an OBS network 200. As shown in FIG. 2, a burst packet 202 and corresponding BHP 204 are transmitted via separate sets of channels, respectively designated a Data Channel Group ("DCG") 206 and a Control Channel Group ("CCG") 208. The channels of a DCG 206 and a CCG 208 may be physically carried on the same or different fibers. When the BHP 204 is transmitted from an edge router 210, the corresponding burst packet 202 is transmitted from the same edge router 210 after an offset time 212 has elapsed. The BHP 204 sets up a forwarding path before the burst 202 arrives at each node 214 along the path. Generally, the offset time 212 is just long enough to allow the BHP 204 to be processed at the OBS nodes 214 along the path.

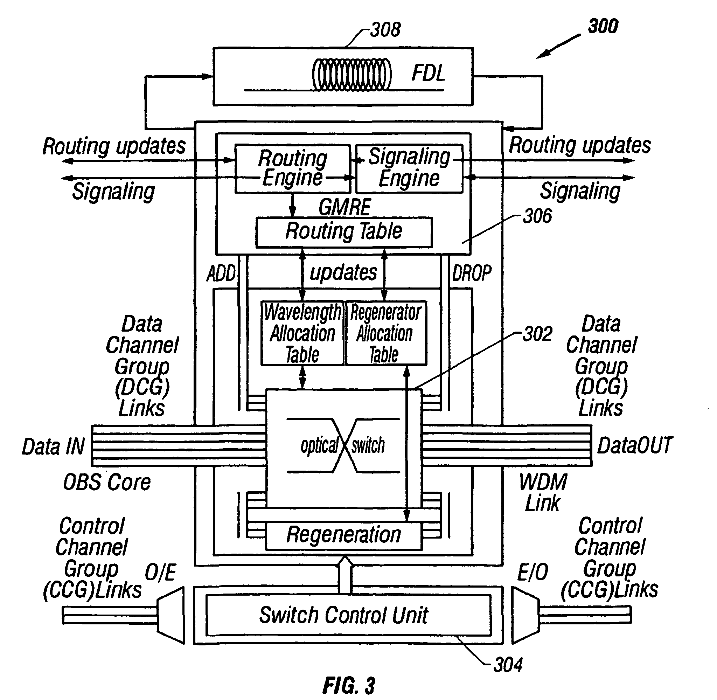

FIG. 3 is.a block diagram of an exemplary OBS node 300 in a Generalized Multi-Protocol Label Switching ("GMPLS") implementation for IP over OBS. As shown in FIG. 3, edge and core OBS nodes, such as the node 300, mainly consist of an optical switching matrix 302 and a Switch Control Unit ("SCU") 304. A GMPLS Routing Engine ("GMRE") 306 is also included in the case of GMPLS implementation for IP over OBS. The GMRE 306 provides GMPLS capabilities, such as routing and signaling to define a Label Switched Path ("LSP") based on an Explicit Route object ("ERO"). The burst follows this path throughout the OBS network. The OBS node 300 is referred to as an OBS Label Switched Router ("LSR") if GMPLS is employed.

A GMPLS control plane provides network planners with the ability to design inherently more flexible networks capable of self-adapting against the hostile characteristics of Internet traffic. Moreover, the main advantage of integrating GMPLS and OBS is that GMPLS control will reduce many of the complexities associated with defining and maintain a separate optical layer for OBS.

GMPLS in OBS uses labels associated with burst packets. In order to forward successive data bursts of the same LSP on different wavelengths in a given fiber, the label only specifies incoming-fiber-to-outgoing-fiber mapping. In other words, the GMPLS label binding is based on fiber interfaces. The burst packet can be converted to any available wavelength within the outgoing fiber interface mapped according to the label. If no wavelength is available, then FDLs 308 are used to delay the burst packet at the node 300.

The actual signaling for setting up, tearing down, and maintaining LSPs can be done either using label distribution protocols ("LDPs") or Resource Reservation Protocols ("RSVPs"). Network topology and network resource information required for traffic engineering are advertised using an augmented interior gateway protocol ("IGP") with appropriate extensions to its link state advertisement ("LSA") messages. It is advisable that the LSA messages in the OBS network carry burst profiles as well as the amount of allocated and free FDL capacity and burst profile, which may include information such as the average number and length of bursts and the average BCP/BDP, for example.

The primary problem in OBS networks is the BDP/BBP. As previously indicated, a burst packet is dropped at a congested OBS node if neither a wavelength nor an FDL is ' available. In the case of high network utilization, BDP can exceed 10 percent. Congestion control is the best solution for the burst dropping problem; however, there have to date been no proposals for congestion control in OBS networks. This is primarily due to the fact that, although OBS technology is based on packet switching technology, no queues are deployed at OBS nodes. When an OBS node receives a burst packet, the node converts the burst into an available outgoing wavelength and transmits it to the next hop, or link. The burst packet is not processed or buffered at the OBS nodes. Accordingly, existing congestion control algorithms, which are based on buffer management techniques, cannot eliminate congestion in bufferless networks, such as OBS.

One solution to the burst dropping problem in OBS networks is to match the number of wavelengths and LSPs in the network; that is, to allocate a separate wavelength for each LSP. This solution is very expensive and results in a waste of the unused portion of the bandwidth. Accordingly, the solution is generally regarded as unacceptable.

Another solution is to decrease the burst data rate for the LSPs that contribute to the congestion. This solution proposes to involve implementation of an Upstream Resource Management Propagation ("URMP") algorithm. The URMP algorithm advantageously provides a technique for reducing congestion in a bufferless network, such as an OBS network, through use of a scalable backpressure method.

During establishment of LSPs in an OBS network, label binding is based on fiber interfaces and no wavelengths are specified. When a burst arrives, therefore, any available wavelength can be selected. Two problems result from this wide range of wavelength candidates for each LSP. The first, referred to herein as the "LSP differentiation problem", results from the fact that, in an OBS network that employs the URMP algorithm described in the above-noted related application or some other congestion control algorithm, when an LSP is congested, the associated OBS node is supposed to trigger congestion control for all of the LSPs involved in the congestion. However, if the OBS node is not able to distinguish which LSPs have an impact on the congestion, it will be required to include all of the LSPs at that node. Hence, in this situation, the LSPs involved in the congestion will be deemed to be those in the Fiber Group; that is, all of the LSPs that use the same outgoing fiber interface at the congested node. Accordingly, a large number of LSPs may be unnecessarily included in the congestion control algorithm.

The second problem, referred to herein as the "scheduling problem", is that when a burst arrives at an OBS node, the node should scan all of the wavelength scope to find the fittest wavelength for conversion. This scan must be accomplished in a very short period of time between the detection and synchronization of the burst. If the OBS node employs a sophisticated scheduling algorithm, such as Latest Available Unscheduled Channel ("LAUC") or LAUC with Void Filling, selecting a wavelength for conversion may not be accomplished in the requisite amount of time if the scope of the wavelengths is large.

SUMMARY OF THE INVENTION

According to the invention, these problems are solved by a methold and an apparatus according to claim 1 and claim 6.

The present invention comprises a technique for differentiating LSPs that contribute to congestion at an OBS node by defining Shared Wavelength Groups ("SWGs") that dedicate a certain group of wavelengths to each LSP. An LSP Differentiation Mechanism uses the SWGs to differentiate which LSPs are to be involved in a congestion control algorithm, such as the URMP algorithm, due to their contribution to the congestion.

In one embodiment, during establishment of an LSP, an upstream OBS node suggests an SWG to support bidirectional wavelength conversion for bidirectional LSPs. While suggesting the wavelengths for the SWG, the upstream OBS node calculates the effective bandwidth of each wavelength to select the less-occupied wavelengths for the SWG. This mechanism minimizes the overlapping of the SWG of the new LSP with the SWGs of the existing LSPs; moreover, it provides some measure of congestion prevention. The downstream OBS nodes allocate the SWG hop-by-hop during transmission of the generalized label upstream.

An LSP will have different SWGs for each hop along the path. Prior to sending the burst to the next OBS hop, incoming burst packets may be converted to any available wavelength within the SWG associated with its LSP belongs.

In one embodiment, an LSP is flagged as contributing to congestion only if the SWG of the LSP overlaps with the SWG of a congested LSP. In an alternative embodiment, an LSP is flagged as contributing to congestion only if the overlap between the SWG of that LSP and the SWG of the congested LSP exceeds a predetermined threshold.

In one aspect, the invention comprises a method of assigning a shared wavelength group ("SWG") to a label switched path ("LSP") between two nodes in an optical network comprising the steps of, for each LSP, a first node advertising to a second node a suggested SWG to be associated with the LSP for a link between the first and second nodes, the suggested SWG comprising a set of suggested wavelengths; and the second node selecting at least one of the suggested wavelengths of the suggested SWG, the selected at least one of the suggested wavelengths comprising an actual SWG associated with the LSP for the link between the first and second nodes.

In another aspect, the invention comprises a method of identifying Label Switched Paths ("LSPs") participating in congestion in an optical network using shared wavelength groups ("SWG"), wherein each SWG is associated with an LSP between two nodes and comprises a set of wavelengths, the method comprising the steps of detecting at a node a congested LSP; and identifying at the node an LSP that has associated therewith an SWG that overlaps with an SWG associated with the congested LSP.

In another aspect, the invention comprises an apparatus for assigning a shared wavelength group ("SWG") to a label switched path ("LSP") between two nodes in an optical network comprising a first node and a second node connected to the first node via a fiber optic link; wherein the first node advertises to the second node a suggested SWG to be associated with an LSP for the fiber optic link between the first and second nodes, the suggested SWG comprising a set of suggested wavelengths for use by the LSP for the fiber optic link; and wherein the second node selects at least one of the suggested wavelengths of the suggested SWG, the selected at least one of the suggested wavelengths comprising an actual SWG associated with the LSP for the link between the first and second nodes.

In another aspect, the invention comprises an apparatus for assigning a shared wavelength group ("SWG") to a label switched path ("LSP") between first and second nodes in an optical network comprising means at the first node for advertising to the second node a suggested SWG to be associated with the LSP for a link between the first and second nodes, the suggested SWG comprising a set of suggested wavelengths, and means at the second node for selecting at least one of the suggested wavelengths of the suggested SWG, the selected at least one of the suggested wavelengths comprising an actual SWG associated with the LSP for the link between the first and second nodes.

In another aspect,'the invention comprises an apparatus for identifying Label Switched Paths ("LSPs") participating in congestion in an optical network using shared wavelength groups ("SWG"), wherein each SWG is associated with an LSP between two nodes and comprises a set of wavelengths for use by the LSP between the nodes, the apparatus comprising means for detecting at a node a congested LSP, and means for identifying at the node an LSP that has associated therewith an SWG that overlaps with an SWG associated with the congested LSP.

BRIEF DESCRIPTION OF THE DRAWINGS

A more complete understanding of the present invention may be had by reference to the following Detailed Description when taken in conjunction with the accompanying drawings wherein:

FIG. 1 illustrates a block diagram of an exemplary OBS network;

FIG. 2 illustrates a block diagram of a portion of an exemplary OBS network;

FIG. 3 illustrates an exemplary node of an OBS network;

FIGs. 4A and 4B illustrate the definition of a Shared Wavelength Group ("SWG") within each fiber of a Data Channel Group ("DCG") of an OBS network in accordance with one embodiment of the present invention;

FIG. 5A illustrates the format of a WAVELENGTH_SET object in accordance with one embodiment of the present invention;

FIG. 5B illustrates the format of an ALLOCATED_SET object in accordance with one embodiment of the present invention;

FIG. 6 illustrates the use of WAVELENGTH_SET and ALLOCATED_SET objects as shown in FIGs. 5A and 5B in setting up SWGs during establishment of an LSP in an OBS network in accordance with one embodiment of the present invention;

FIGs. 7A-7C illustrate LSP differentiation for congestion control according to three options in accordance with features of the present invention;

FIG. 8 illustrates a network topology for use in a simulation study of the effectiveness of a combination of the use of SWGs and a congestion control algorithm in accordance with one embodiment of the present invention;

FIG. 9 is a burst traffic arrival model for each LSP used in a simulation study of the effectiveness of a combination of the use of SWGs and a congestion control algorithm in accordance with one embodiment of the present invention; and

FIGs. 10-13 are charts illustrating results of a simulation study performed using the network topology of FIG. 8 and the burst traffic arrival model of FIG. 9.

DETAILED DESCRIPTION OF THE DRAWINGS

In the drawings, like or similar elements are designated with identical reference numerals throughout the several views thereof, and the various elements depicted are not necessarily drawn to scale.

It should be noted that the invention described herein may be advantageously implemented in other types of OBS networks, as well as in other types of packet-switched networks and in GMPLS networks in general.

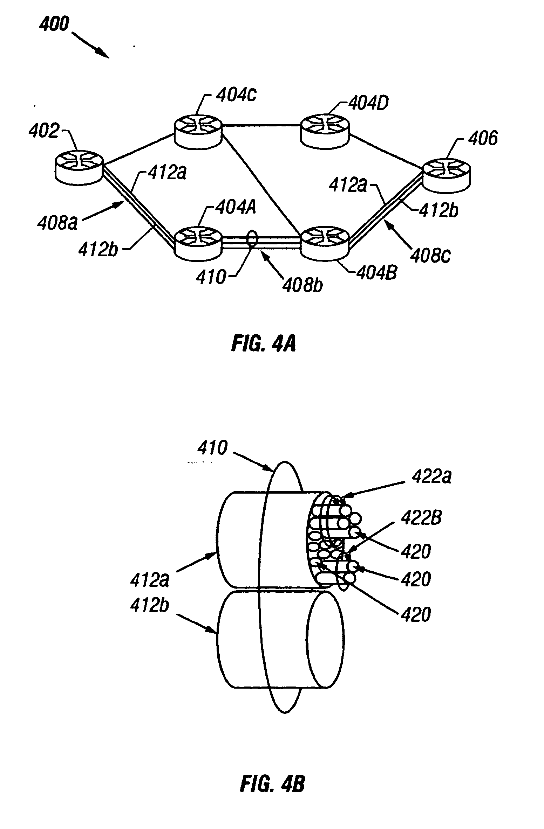

FIG. 4A is a block diagram of an exemplary OBS network 400 in which one embodiment of the present invention is implemented. The network 400 includes an ingress edge router 402, several OBS nodes 404A-404D, and an egress edge router 406. It will be assumed that an LSP is established between the ingress edge router 402 and the egress edge router 406 through the OBS nodes 404A and 404B. The LSP has three hops 408A (between the ingress edge router 402 and OBS node 404A), 408B (between OBS node 404A and OBS node 404B), and 408C (between the OBS node 404B and egress edge router 408). A Data Channel Group ("DCG") 410 in each hop has two fiber links 412a and 412b.

It will be assumed for the sake of example that a GMRE (not shown) selects fiber link 412b for the first hop 408a, fiber link 412a for the second hop 408b, and the fiber link 412a for the third hop 408c.

FIG. 4B illustrates the hop 408b in greater detail. As shown in FIG. 4B, the fiber link 412a, which has been selected for the hop 408b, includes a number of wavelengths 420. In the illustrated example, the LSP may select one of two SWGs 422a, 422b, which consist of four and two wavelengths 420, respectively. It should be noted that the SWGs 422a, 422b, are valid for the particular LSP only between the nodes 404a and 404b within the fiber link 412a.

The GMPLS architecture allows an upstream node to suggest a Label Set within an object referred to as Label_Set. This object is used in Path message sent the RSVP control plane while setting up the path. Downstream nodes choose a label within the Label Set and inform the upstream node using Resv messages. Similarly, in accordance with one embodiment, when an edge OBS node receives a Label request from an ingress edge router, the edge OBS node inserts a WAVELENGTH_SET object into the Path message to define the SWG before forwarding it to the downstream OBS node.

The format of a WAVELENGTH_SET object includes the following:

- Action Field
- Wavelengths, $\{\lambda1, \lambda2, \lambda3, ... \lambda N\}$

The range of each SWG is defined using one or more WAVELENGTH_SET objects. In particular, specific wavelengths can be added to or excluded from an SWG via Action Zero (0) or Action One (1), respectively. a range of wavelengths can be added to or excluded from an SWG via Action Two (2) or Action Three (3), respectively. The absence of any WAVELENGTH_SET objects implies that all wavelengths are acceptable. On the reception of a Path message, the receiving OBS node will restrict its choice of wavelengths to those that are in the SWG. OBS nodes may remove the WAVELENGTH_SET object and add new WAVELENGTH_SET objects according to their own restrictions prior to forwarding the Path message to the next hop.

When the upstream OBS node suggests the range of an SWG, it should make it as wide as possible. In the general case for a suggested SWG, the upstream node only excludes the wavelengths that it may not use due to certain limitations. A wavelength selection algorithm is set forth in detail below. Finally, if the downstream node is unable to allocate the SWG for the upstream node from the suggested SWG, a PathErr message with an "SWG Allocation Problem" indication must be generated for the upstream node.

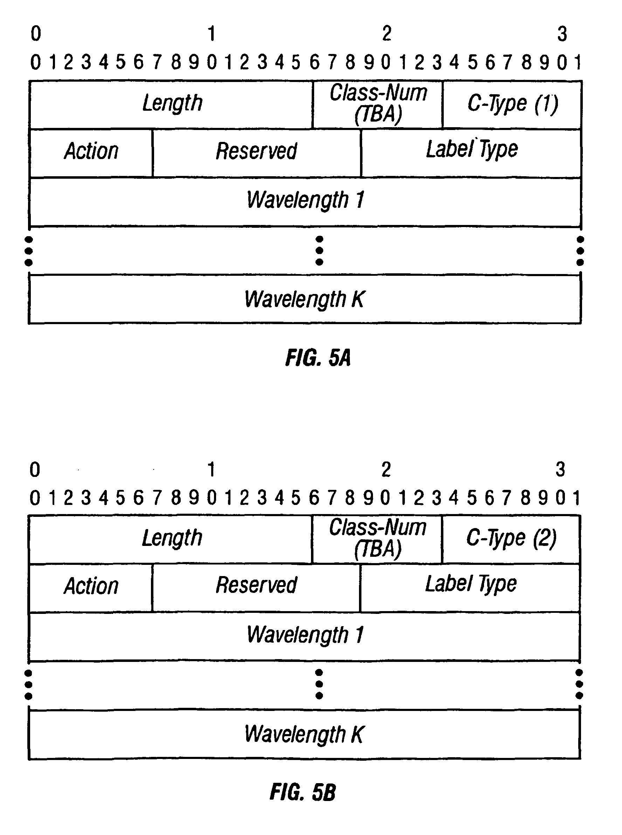

The format of a WAVELENGTH_SET object is illustrated in FIG. 5A.

The goal of suggesting an SWG in the above-described manner is to minimize the number of wavelength conversions at the nodes and to allow the realization of the bidirectional LSPs in the OBS, thereby enabling the use of the same SWGs for upstream and downstream links between two neighboring nodes. The only addition to the unidirectional LSP is that an upstream label is added to the Path message.

Prior to forwarding the WAVELENGTH_SET object within the Path message, the OBS node determines which wavelengths to choose for suggestion. The suggestion is initially based on two criteria, including the bidirectional wavelength conversion capabilities for wavelengths within upstream and downstream SWGs and the effective bandwidth on the candidate wavelength for the SWG suggestion. In particular, with respect to the second criterion, if the new effective bandwidth is below a certain threshold, the wavelength will not be used for the SWG suggestion. This aims to prevent allocation of a wavelength that is heavily used by preexisting LSPs.

The effective bandwidth on the candidate wavelength depends on the number of LSPs using the wavelength and their demands. For example, assuming that LSPs have a uniform traffic distribution among the wavelengths for its SWGs at every hop, the effective bandwidth of a wavelength $\lambda_k$ may be defined as:

$$\mathrm{Eff}\lambda_k = C\lambda_k - \sum_{\forall \lambda_k \in G_{i,m}} R_i / G_{i,m}$$

Where $\mathrm{Eff}\lambda_k$ is the effective bandwidth for the wavelength $\lambda_k$, $C\lambda_k$ is the total capacity of the wavelength $\lambda_k$, $R_i$ is the bandwidth assigned to the LSP $i$, $G_{i,m}$ is the number of wavelengths in the SWG assigned to the LSP $i$ at hop $m$, and the summation is performed over all the LSPs that have the wavelength $\lambda_k$ within their SWGs at the hop m. If $\mathrm{Eff}\lambda_k \leq$ threshold, wavelength $\cdot\lambda_k$ is not assigned for any new LSP requests.

The SWGs are allocated on a hop-by-hop basis. When an OBS node receives a generalized label object in a Resv message, OBS node encapsulates an ALLOCATED_SET object associated with the generalized label into the Resv message. The generalized label travels in the upstream direction in Resv messages.

The format of the ALLOCATED_SET object is as follows:

- Action Field

- Wavelengths {λ1, λ2, λ3, ... λN}

The actual range of an SWG is defined via the ALLOCATED_SET object, which also travels upstream in the Resv message. Specific wavelengths from the suggested SWG may define the actual range of the SWG, or may be excluded from the actual range of the SWG via Action Zero (0) or Action One (1), respectively. A range of wavelengths from the suggested SWG may define the actual range of the SWG or may be excluded from the actual range of the SWG via Action Two (2) or Action Three (3), respectively. The absence of any ALLOCATED_SET objects implies that all wavelengths within the suggested SWG are acceptable. Therefore, the actual range of an SWG consists of al the wavelengths within the suggested SWG.

The format of an ALLOCATED_SET object is illustrated in FIG. 5B.

When the unidirectional or bidirectional LSP is removed, the SWGs are removed from each node. The GMPLS-RSVP-TE extensions offer some notifications on Label Error, e.g., via an ACCEPTABLE_LABEL_SET object. A similar object, ACCEPTABLE_WAVELENGTH_SET, may be used in PathErr and ResvErr messages.

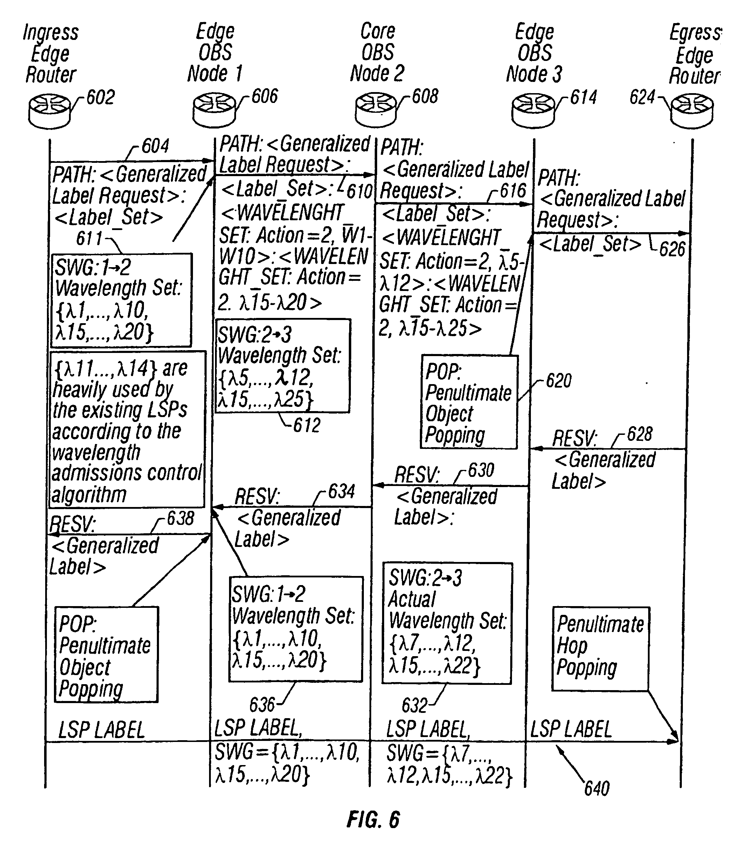

FIG. 6 illustrates a set-up procedure for establishing a SWG during LSP establishment in an OBS network 600. An ingress edge router 602 issues a Path message 604 including a Generalized Label Request and Label_Set. When an edge OBS node 606 receives the Path message 604 containing the label request, it establishes a suggested SWG for the new LSP. The suggested SWG comprises a set of wavelengths that the OBS edge node 606 advertises to a core OBS node 608 via a Path message 610 containing a WAVELENGTH_SET object. The edge OBS node 606 selects the suggested SWG, designated in FIG. 5 by a reference numeral 611, as including the set of wavelengths {λ1-λ10} and {λ15-λ20}. In the illustrated example, the set wavelengths {λ11-λ14} were not selected because the effective bandwidth of each of the wavelengths were determined to be below the threshold due to heavy usage of those wavelengths by other existing LSPs.

The core OBS node 608 then establishes a suggested SWG ({λ5-λ12} and {λ15-λ20}) to be advertised for the next hop. This suggested SWG, designated in FIG. 5 by a reference numeral 612, is advertised to an edge OBS node 614, via a Path message 616 containing appropriate WAVELENGTH_SET objects. When the edge OBS node 614 receives the Path message 616, the node extracts, or "POPs", the WAVELENGTH_SET object, which is referred to as Penultimate Object Popping ("POP"). After the object POP, designated in FIG. 5 by a reference numeral 620, the OBS node 614 only sends the generalized label request and Label Set objects to an egress edge router 624 via a Path message 626.

The egress edge router 624 issues a Resv message 628 containing a generalized label destined for the ingress edges router 502. When the edge OBS node 614 receives the Resv message, it may eliminate some of the wavelengths within the suggested SWG 612 issued by the OBS node 608. In the illustrated example, the OBS node 614 eliminates the wavelengths λ5, λ6, λ23, λ24, and λ25 and it advises the OBS node 608 of its selection using the ALLOCATED_SET objects, which are inserted in to a Resv message 630 issued to the node 608. In general, an OBS node may eliminate the wavelengths from the suggested SWG due to some physical limitation, such as port failure, or to lack of wavelength conversion capabilities at the port.

When the OBS node 608 receives the Resv message 630, it eliminates the wavelengths defined in the ALLOCATED_SET object from its suggested SWG 612, and creates an Actual SWG 632. When the OBS node 608 receives a burst associated with this LSP, it converts the burst into any available wavelength within the actual SWG before sending the burst to the OBS node 614.

The OBS node 608 then replaces the ALLOCATED_SET objects with new ALLOCATED_SET objects designating the wavelengths that should be eliminated from the suggested SWG 611 between itself and the OBS node 606. In this example, the OBS node 608 has no restrictions for the suggested SWG 611 for the hop between the OBS node 606 and the node 608; accordingly, no ALLOCATED_SET object is inserted into a Resv message 634 issued by the node 608 to the nod 606. Therefore, an actual SWG 636 at the OBS node 606 is the same as the suggested SWG 611 previously advertised to the OBS node 608 in the Path message 610. The OBS node 606 is the POP node for the ALLOCATED_SET objects in the Resv messages. In other words, the node 606 extracts the ALLOCATED_SET object from the Resv message. The OBS node 606 forwards a Resv message 638 to the ingress edge router 602. Finally, the path and SWGs at each hop are established for the LSP, as indicated by a path designated by the reference numeral 640. Penultimate Hop Popping ("PHP"), which refers to end of the LSP, occurs at the egress edge router 624. After the occurrence of PHP, the router 624 extracts the GMPLS header related to this LSP before forwarding it to the next node. At this point, techniques other than GMPLS, for example, IP or ATM, are responsible for forwarding.

It should be noted that the techniques described herein for determining a shared wavelength group may also be applied in a slot-based OBS. In particular, in a slot-based OBS, in which OBS packets will use a time slot in any wavelength, applying the SWG concept, multiple periodicity of the slot assignment can be defined for each OBS flow. Therefore, instead of putting multiple wavelengths in the WAVELENGTH_SET object, as described above, a SLOT_SET object will be defined and will contain many periods, such as 2, 4, and 5, meaning that the OBS flow can use a slot that has a slot number that is a multiple of 2 or 4 or 5, but not 3, for example. In another example, the system can be defined such that the OBS flow can use any slot with a slot number ending in the numbers of the SLOT_SET (e.g., 2, 4, or 5), but not others. In this case, the OBS switch should employ some fiber delay lines to accommodate the OBS burst into one of the defined slots.

One of the ways in which an OBS node determines that a particular LSP is congested is by detecting that the BBP of the LSP exceeds a threshold value. In accordance with features of one embodiment, when congestion is detected, the congested node may apply one of the following procedures to differentiate the LSPs for congestion.

First, if the node is not using SWGs as taught here, but is instead using the Fiber Group, the OBS node includes all of the LSPs that use the same outgoing fiber interface as the congested LSP. It will be assumed for the sake of the following example that $K$ LSPs contend for the same outgoing fiber interface, where $K$ is a number between one and several thousand. If the node is using the SWG technique of the present invention, then the node may apply one of the following approaches.

First, the OBS node may include all of the LSPs that have at least one wavelength in their SWGs that overlap with the SWG of the congested LSP. Alternatively, the OBS node can include an LSP if and only if the overlap between the SWG of that LSP and the SWG of the congested LSP exceeds a threshold defined as:

$$C(SWG\ x, SWG\ i) \geq c,\ i = 1, ... , K$$

where SWG $x$ is the SWG of the congested LSP, SWG $i$ is the SWG of an LSP $i$, $K$ is the number of LSPs using the same outgoing fiber interface as the congested LSP, C(SWGx, SWGi) is the overlapping ratio, and c is the threshold.

Assume that $K$ is the number of LSPs using the same outgoing fiber interface as the congested LSP as given above, $K_1$ is the number of LSPs that have at least one or more wavelengths correlated to the congested LSP, and $K_2$ is the number of LSPs whose SWG overlapping ratio exceeds a threshold. In this case, the number of LSPs involved in the URMP algorithm for each case has the following property:

$$K >> K_1 \geq K_2$$

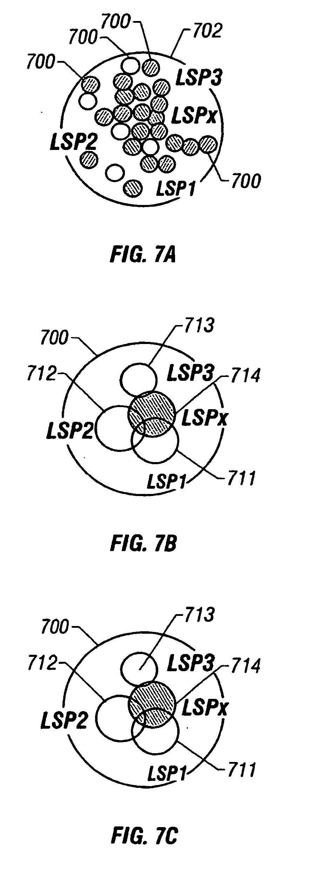

FIGs. 7A-7C illustrate the impact of the LSP differentiation algorithm for the Fiber Group and SWG. Assume that LSP$x$ is congested. FIG. 7A depicts Fiber Group (no SWG) deployment, in which a group of LSPs (LSP1, LSP2, LSP3 and LSPx) can select any available wavelengths 700 within the outgoing fiber 702. If a congested OBS node cannot differentiate which LSPs should be deemed to participate in the congestion, all of the LSPs are included.

FIG. 7B depicts the deployment of the SWG techniques described herein in which an LSP is identified as participating in the congestion if the SWG of the LSP and the SWG of the congested LSP have at least one overlapping wavelength. In the illustrated example, SWGs 711, 712, and 713 have been defined for LSP1, LSP2, and LSP3, respectively. An SWG 714 has been defined for LSPx. In this case, LSP1, LSP2, and LSP3 are deemed to participate in the congestion since their SWGs 711, 712, 713, are overlapped with the SWG 714 of LSP*x*.

FIG. 7C illustrates the deployment of the SWG techniques described herein in which an LSP is identified as participating in the congestion if the overlap between the SWG of the LSP and the SWG of the congested LSP (LSPx) exceeds a threshold. In this case, only LSP1 and LSP2 deemed to participate in the congestion; the overlap between the SWG 713 and the SWG 714 is less than a predefined threshold.

Node-level scheduling algorithms are considered to select an available wavelength for each data burst at the OBS node. Some of the OBS scheduling algorithms are Latest Available Unscheduled Channel ("LAUC"), LAUC with Void Filling ("LAUC-VF"), First Fit ("FF") and FF-VF. It will be noted that the LAUC-VF algorithm generally give the best results.

The LAUC-based scheduling algorithms scan all of the wavelength scope within the outgoing fiber. The algorithm the selects the latest available unscheduled wavelength for the burst to be transmitted. The fiber may have a couple of hundred wavelengths. The LAUC should scan all of the wavelengths and compare them within a short time starting with burst realization on the fiber and the synchronization of the burst. By defining an SWG for each LSP, the OBS node can scan fewer wavelengths in order to schedule, thereby decreasing the scheduling delay.

In order to insure that the wavelengths selected to be included in an SWG for a particular LSP are selected efficiently and effectively, an "SWG Triggering Algorithm" is employed. The SWG Triggering Algorithm operates as follows. First, when the OBS node has a small number of LSPs for an outgoing fiber, it does not suggest any SWGs for the LSPs. In this context, a small number of LSPs is defined as a number of LSPs less than the number of wavelengths in the outgoing fiber interface. When the number of LSPs exceeds the number of wavelengths for the outgoing fiber interface, the OBS node suggests an SWG for each new incoming LSP request that will use the fiber interface. The LSPs that are not assigned any SWGs are always defined as participating in the congestion at the node.

The above-described SWG Triggering Algorithm provides wavelength switching-alike advantage during a small number of LSPs. When the network is prone to congestion, the wavelengths are effectively allocated and controlled according to the SWG.

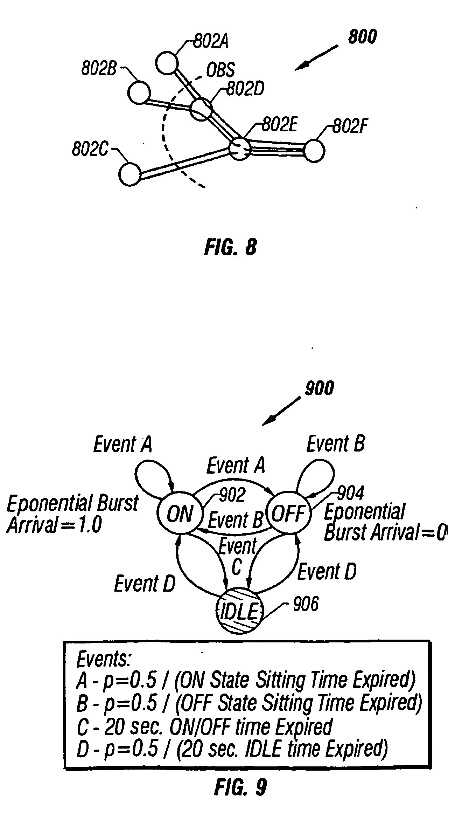

FIGs. 8-13 illustrate a simulation study performed to verify the efficacy of the implementation of the present invention described herein. FIG. 8 is a topological diagram of a portion of an OBS network 800 in which the URMP algorithm in the aforenoted related patent application, which has been incorporated by reference in its entirety, as well as the embodiments described herein are implemented. As shown in FIG. 8, the network portion 800 includes three ingress edge routers 802A, 802B, and 802C. It will be assumed that 750 LSPs have been established. It will be further assumed that 250 of these LSPs run from the edge router 802A to core node 802F through nodes 802D and 802E, 250 of the LSPs run from the edge router 802B to core node 802F through nodes 802D and 802E, and the remaining 250 from the edge router 802C to core node 802F though the node 802E. Each fiber has 64 channels (wavelengths) with a capacity of 10 Gpbs. It will be further assumed that the network employs the JET scheme in which the resources of each node are reserved only for the duration of the burst.

FIG. 9 illustrates a burst traffic arrival model 900 for each LSP in the network 800 as used in a simulation study involving the network. The model 900 consists of three states, including an ON state, an OFF state, and an IDLE state, respectively designated by reference numerals 902, 904, and 906. The ON state 902 corresponds to an exponential burst arrival. The average burst arrival rate in this state 902 is defined to provide 100 percent link utilization for a link of 64 channels. Accordingly, the average arrival rate in the ON state 902 is approximately 88 burst packets per second for each LSP. The average arrival rate in the OFF state 904 is zero. The sitting time at each state 902, 904, is also exponentially distributed.

In the examples described hereinbelow, it will be assumed that the total of average sitting time in ON state 902 and OFF state 904 is one second. The average sitting time in the ON state 902 is between 0.5 and 0.9 seconds. Therefore, the average sitting time in the OFF state 904 is between 0.5 and 0.1 seconds. After the sitting time in one state 902, 904, elapses, the LSP switches to the other state 904, 902 with a probability of 0.5, or it stay in the same state with the same probability.

Each LSP spends the last 20 seconds of every 40 second period in the IDLE state 906. The reason for the IDLE state 906 is that the URMP algorithm makes each LSP queue build up, which creates an excessive queue size and event allocation problem in the simulation described herein. The IDLE state 906, therefore, is created to neutralize the LSP queues at the ingress edge routers. The sitting time in the IDLE state 906 is deterministic. When the 20 second IDLE period has expired, the LSP switches to the ON state 902 or the OFF state 904 with a probability of 0.5. The length of burst packets is also exponentially distributed. The average burst length is 18 Kbytes. The maximum and minimum burst length is 19 and 17 Kbytes. The slot time for the slot-based transmission period is defined as 19.01 Kbytes in order to carry the maximum length burst. The simulation run is 50,000,000 burst arrivals.

The following parameters are collected:

- Burst Blocking Percentage ("BBP")
- Average Burst Transmission Delay
- Number of RSVP packets with URMP objects (per second)

The average burst transmission delay includes the burst transmission delay, propagation delay, and channel access delay, which is due to slot-transmission scheme in URMP.

The network topology illustrated in FIG. 8 is first simulated without the URMP algorithm, using Fiber, SWG-32, and SWG-48. SWG-N means that an LSP is assigned only N number of wavelengths among 64 wavelengths. The same topology is then simulated with the URMP algorithm. A First-Fit algorithm is used to assign the wavelength within the Fiber or SWG-N.

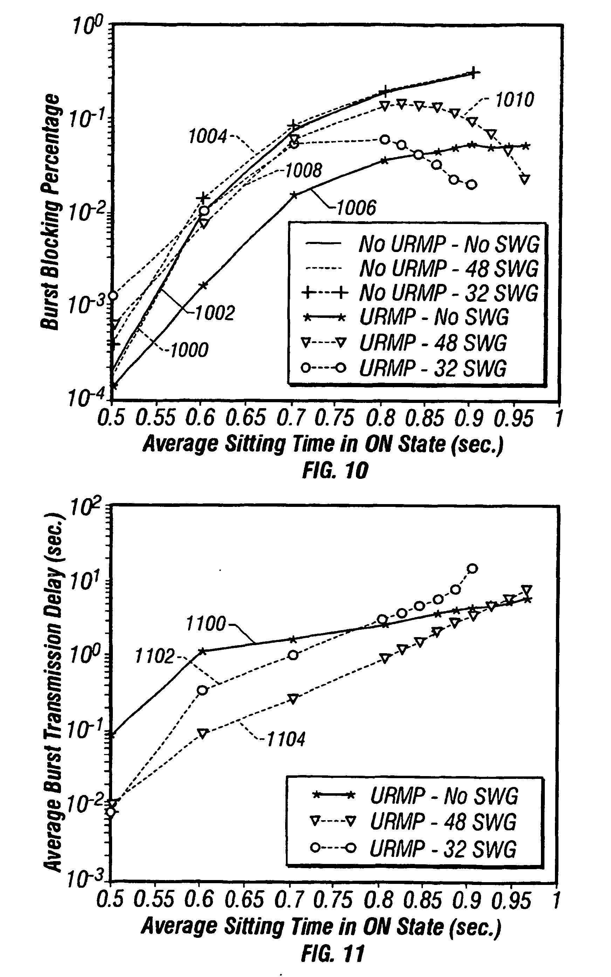

FIG. 10 illustrates the BBP versus the average sitting time in the ON state. FIG. 10 illustrates the average BBP both with and without the URMP algorithm. Where there is no URMP applied, the BBP for Fiber ("No URMP - No SWG") increases from $1.72 \times 10^{-4}$ to 0.33 as the average sitting time in the ON state increases from 0.5 to 0.9, as illustrated by a line 1000. The SWG-48 with no URMP applied ("No URMP - 48 SWG") gives very similar results, as illustrated by a line 1002. The SWG-32 with no URMP applied ("No URMP - 32 SWG") introduces slightly higher BBP ($3.93 \times 10^{-4}$) for the average sitting time of 0.5, as illustrated by a line 1004. Note that most of the burst blocking occurs at the link between nodes E and F, since it carries all 750 LSPs. The link between nodes D and E carries 500 LSPs, and the rest of the links carry 250 LSPs.

When the URMP algorithm is applied, each LSP randomly selects 64 slots out of 750 slots and 64 channels without the SWG. The URMP with no SWG ("URMP-No SWG") gives approximately 5.5 percent of BBP as the system is fully loaded, as illustrated by a line 1006. In the SWG-N option, each LSP again randomly selects N slots out of 64 channels and some number of slots, which is equal to the number of LSPs involved in the process. Hence, the URMP with SWG-N introduces less BBP as the average sitting time increases due to the lesser amount of slots selected by the LSPs. As the average sitting time increases, the URMP with SWG-32 ("URMP - 32 SWG") and SWG-48 ("URMP - 48 SWG") yield BBPs of 2.1 and 2.4 percent, respectively, as illustrated by lines 1008 and 1010. However, the BBP for URMP-32 SWG reaches as high as 6.4 at the average sitting time of 0.8. The BBP reaches 15.68 percent for URMP-48 SWG at the average sitting time of 0.82. Moreover, the URMP-32 SWG and the URMP-48 SWG introduce BBPs of $1.33 \times 10^{-3}$ and $6.49 \times 10^{-4}$, respectively, at the average sitting time of 0.5. This is because as the average sitting time increases, the number of LSPs involved in the URMP process increases, resulting in an increase in the number of slots within the URMP period.

An increase in the number of slots allows the system to assign the slots more successfully to the LSPs. When the number of slots within the URMP period is small, the active LSPs contend for the same small number of slots. As previously indicated, each LSP selects 64 slots among 750 slots and 64 channels for the URMP without the SWG. If each LSP selects a lesser number of slots, such as 32 instead of 64, it decreases the BBP dramatically down to the degree of $10^{-7}$. However, on the other hand, it introduces a significant amount of burst delay even when the average sitting time is 0.5. The average burst transmission delay is unacceptably 6 seconds for the average sitting time of 0.5.

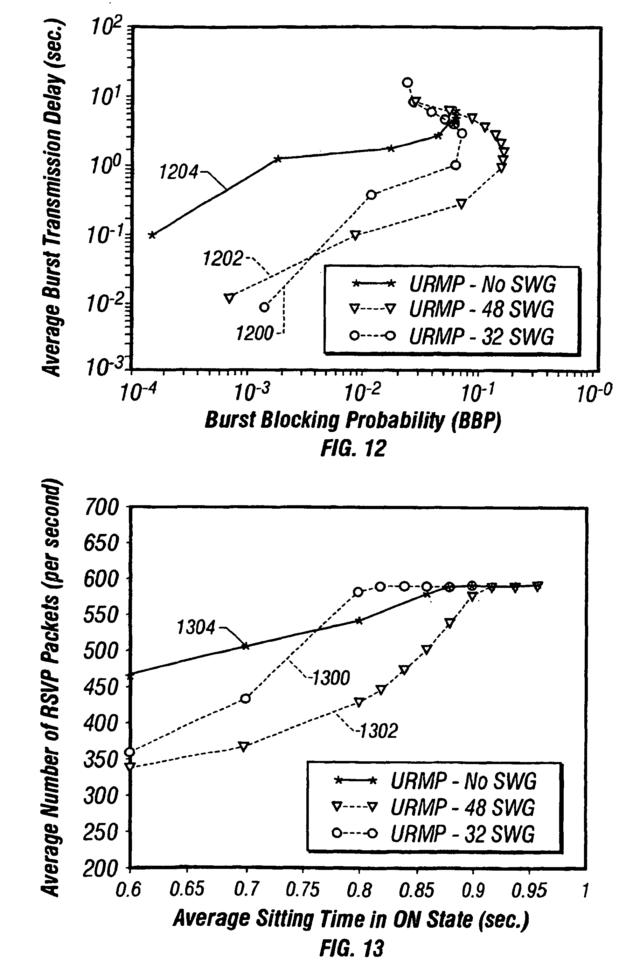

FIG. 11 illustrates the average burst transmission delay versus the average sitting time in the ON state. FIG. 12 illustrates the average burst transmission delay versus the BBP. The average burst transmission delay includes the burst transmission delay, propagation delay, and channel access delay, which is due to the slot-transmission scheme in URMP. The average burst transmission delay for the non-URMP system is $4.48 \times 10^{-3}$, which only includes the transmission and propagation delays. Referring to FIG. 11, the URMP with Fiber ("URMP - No SWG") introduces higher delay up to the average sitting time of 0.8, as illustrated by a line 1100. The URMP with SWG-32 ("URMP - 32 SWG") introduces more delay, but decreases the BBP, as illustrated by a line 1102. The URMP with SWG-48 ("URMP - 48 SWG") introduces even more delays than the URMP - No SWG after the average sitting time exceeds 0.92, as illustrated by a line 1104.

Referring to FIG. 12, the SWG-32 ("URMP - 32 SWG"), as illustrated by a line 1200, introduces less delay than SWG-48 ("URMP - 48 SWG"), as illustrated by a line 1202, up to a BBP of $4 \times 10^{-3}$. After this point, the SWG-32 introduces higher delay as the BBP increases. However, as the BBP starts declining again, the SWG-32 again introduces less delay than SWG-48. At approximately 2 percent, the SWG-32 again surpasses the SWG-48 in terms of delay. As the BBP increases to $5 \times 10^{-2}$, the URMP without SWG ("URMP - No SWG"), as illustrated by a line 1204, introduces the highest delay among the three arrangements. Briefly, the SWG-N arrangements introduce less delay when the traffic load is less and, when the load increases severely, the SWG-N arrangement decrease the BBP by introducing more delay.

FIG. 13 illustrates the average number of transmitted RSVP packets with the URMP object versus the average sitting time in the ON state. Note that it is assumed that the congested node issues an RSVP packet only for the active LSPs for the URMP-No SWG during this congestion period. For the SWG-32 and -48 ("URMP - 32 SWG" and "URMP - 48 SWG", respectively) arrangements, the results of which are respectively illustrated by lines 1300 and 1302, only an active LSP whose SWG group is 50 percent occupied by the active LSPs is included. The SWG-N schemes introduce fewer RSVP packets when the average sitting time is small. As the average sitting time exceeds approximately 0.76, the SWG-32 begins issuing more RSVP packets than the URMP - No SWG, the results of which are indicated by a line 1304. The reason for this is that during the IDLE time period, the URMP - No SWG empties the LSPs in its queues quickly. However, the SWG-32 cannot empty the queues, the edge routers keep issuing RSVP packets until all of the queues are empty, which is 20 seconds, or all of the IDLE period. As the average sitting time increases, all of the arrangements converge to the same number or RSVP packets, which is equal to the active LSPs.

Accordingly, it may be concluded that the URMP algorithm of the present invention provides several advantages over the prior art. First, the URMP algorithm provides means by which overlapped congestion may be merged into one congestion. Moreover, the algorithm synchronizes the ingress edge routers that contribute to the same congestion. By the beginning of the synchronization, the ingress edge routers switch their transmission types from asynchronous to slot-based transmission with a controlled data rate, thereby guaranteeing less burst collision/dropping. Finally, the congestion state continues until the LSP that owns the congestion is torn down, similar to the Resv and Path state tear-down process in RSVP.

Based upon the foregoing Detailed Description, it should be readily apparent that the present invention advantageously provides an innovative and efficient solution for providing congestion control in an OBS network. In particular, the invention provides a scalable backpressure method that adapts the data rate of the flows in an OBS network and changes the transmission type thereof from asynchronous to time-division multiplex ("TDM") with a rate-control mechanism responsive to detection of a congestion incident.

It is believed that the operation and construction of the present invention will be apparent from the foregoing Detailed Description. While the exemplary embodiments of the invention shown and described have been characterized as being preferred, it should be readily understood that various changes and modifications could be made therein without departing from the scope of the present invention as set forth in the following claims.

**Claims**

1. A method of identifying Label Switched Paths participating in congestion in an optical network, wherein the optical network comprises at least two Optical Burst Switching nodes, **characterized in that** the optical network uses Shared Wavelength Groups (422), wherein each Shared Wavelength Group is associated with one of the Label Switched Paths between the two nodes (404) and wherein each Shared Wavelength Group comprises a set of wavelengths (420) for use by the one of the Label Switched Paths between the two nodes, the method comprising the steps of:

   detecting at one of the two Optical Burst Switching nodes a congested Label Switched Path;
   evaluating at the one of the two Optical Burst Switching nodes a Shared Wavelength Group (714) associated with the congested Label Switched Path;
   identifying at the one of the two Optical Burst Switching nodes a Label Switched Path that has associated therewith a Shared Wavelength Group (711, 712, 713) that overlaps with the Shared Wavelength Group (714) associated with the congested Label Switched Path; and
   using at the one of the two Optical Burst Switching nodes the identified Label Switched Path as a Label Switched Path possibly participating in congestion.

2. The method of claim 1 wherein the using step further comprises:
   wherein the identified Label Switched Path is deemed to participate in the congestion.

3. The method of claim 1 wherein the using step further comprises the step of:

   determining whether an overlap between the Shared Wavelength Group (711, 712, 713) associated with the identified Label Switched Path and the Shared Wavelength Group (714) associated with the congested Label Switched Path exceeds a predetermined threshold value;

   wherein if the overlap exceeds the predetermined threshold value, the identified Label Switched Path is deemed to participate in the congestion.

4. The method of claim 2 or claim 3 wherein the identified Label Switched Path deemed to participate in the congestion is included in a congestion control algorithm.

5. The method of claim 1 wherein the identified Label Switched Path is included in a congestion control algorithm.

**6.** An apparatus for identifying Label Switched Paths participating in congestion in an optical network, wherein the optical network comprises at least two Optical Burst Switching nodes,

**characterized in that**

the optical network uses Shared Wavelength Groups (422), wherein each Shared Wavelength Group is associated with one of the Label Switched Paths between the two nodes (404) and wherein each Shared Wavelength Group comprises a set of wavelengths (420) for use by the one of the Label Switched Paths between the two nodes,

the apparatus comprising:

means for detecting at one of the two Optical Burst Switching nodes a congested Label Switched Path;

means for evaluating at the one of the two Optical Burst Switching nodes a Shared Wavelength Group (714) associated with the congested Label Switched Path;

means for identifying at the one of the two Optical Burst Switching nodes a Label Switched Path that has associated therewith a Shared Wavelength Group (711, 712, 713) that overlaps with the Shared Wavelength Group (714) associated with the congested Label Switched Path; and

means for using at the one of the two Optical Burst Switching nodes the identified Label Switched Path as a Label Switched Path possibly participating in congestion.

**7.** The apparatus of claim 6 wherein the means for using further comprises:

wherein the identified Label Switched Path is deemed to participate in the congestion.

**8.** The apparatus of claim 6 wherein the means for using further comprises:

means for determining whether an overlap between the Shared Wavelength Group (711, 712, 713) associated with the identified Label Switched Path and the Shared Wavelength Group (714) associated with the congested Label Switched Path exceeds a predetermined threshold value;

wherein if the overlap exceeds the predetermined threshold value, the identified Label Switched Path is deemed to participate in the congestion.

**9.** The apparatus of claim 7 or claim 8 wherein the identified Label Switched Path deemed to participate in the congestion is included in a congestion control algorithm.

**10.** The apparatus of claim 6 wherein the identified Label Switched Path is included in a congestion control algorithm.

**Patentansprüche**

**1.** Ein Verfahren zur Identifizierung von Etikettvermittlungswegen, die an einer Überlastung in einem optischen Netz beteiligt sind, wobei das optische Netz mindestens zwei optische Burstvermittlungsknoten umfasst,

**dadurch gekennzeichnet, dass**

das optische Netz Gruppen gemeinsamer Wellenlängen (422) nutzt, wobei jede Gruppe gemeinsamer Wellenlängen einem Etikettvermittlungsweg zwischen den beiden Knoten (404) zugeordnet ist und wobei jede Gruppe gemeinsamer Wellenlängen eine Gruppe an Wellenlängen (420) zur Nutzung durch einen der Etikettvermittlungswege zwischen den beiden Knoten umfasst,

wobei das Verfahren folgende Schritte beinhaltet:

Erfassung eines überlasteten Etikettvermittlungswegs in einem der beiden optischen Burstvermittlungsknoten;

Auswertung einer Gruppe gemeinsamer Wellenlängen (714) in einem der beiden optischen Burstvermittlungsknoten, die dem überlasteten Etikettvermittlungsweg zugeordnet ist;

Identifizierung des Etikettvermittlungsweges in einem der beiden optischen Burstvermittlungsknoten, dem eine Gruppe gemeinsamer Wellenlängen (711, 712, 713) zugeordnet wurde, die eine Überschneidung mit der Gruppe gemeinsamer Wellenlängen (714) aufweist, die dem überlasteten Etikettvermittlungsweg zugeordnet ist; und

Nutzung des identifizierten Etikettvermittlungswegs in einem der beiden optischen Burstvermittlungsknoten als Etikettvermittlungsweg, der möglicherweise an der Überlastung beteiligt ist.

**2.** Das Verfahren aus Anspruch 1, wobei der Nutzungsschritt außerdem umfasst:

wobei der identifizierte Etikettvermittlungsweg wahrscheinlich an der Überlastung beteiligt ist.

**3.** Das Verfahren aus Anspruch 1, wobei der Nutzungsschritt außerdem den folgenden Schritt umfasst:

Feststellung, ob eine Überschneidung zwischen der Gruppe gemeinsamer Wellenlängen (711, 712, 713), die dem identifizierten Etikettvermittlungsweg zugeordnet ist, und der Gruppe gemeinsamer Wellenlängen (714), die dem überlasteten Etikettvermittlungsweg zugeordnet ist, einen vordefinierten Grenzwert überschreitet;

wobei der identifizierte Etikettvermittlungsweg als an der Überlastung beteiligt erachtet wird, wenn die Überschneidung den vordefinierten Grenzwert überschreitet.

4. Das Verfahren aus Anspruch 2 oder Anspruch 3, wobei der identifizierte Etikettvermittlungsweg, der als an der Überlastung beteiligt betrachtet wird, in einen Überlastregelungsalgorithmus einbezogen wird.

5. Das Verfahren aus Anspruch 1, wobei der identifizierte Etikettvermittlungsweg in einen Überlastregelungsalgorithmus einbezogen wird.

6. Eine Vorrichtung zur Identifizierung von Etikettvermittlungswegen, die an einer Überlastung in einem optischen Netz beteiligt sind, wobei das optische Netz mindestens zwei optische Burstvermittlungsknoten umfasst,
**dadurch gekennzeichnet, dass**
das optische Netz Gruppen gemeinsamer Wellenlängen (422) nutzt, wobei jede Gruppe gemeinsamer Wellenlängen einem der Etikettvermittlungswege zwischen den beiden Knoten (404) zugeordnet ist und wobei jede Gruppe gemeinsamer Wellenlängen eine Gruppe an Wellenlängen (420) zur Nutzung durch einen der Etikettvermittlungswege zwischen den beiden Knoten umfasst,
wobei die Vorrichtung besteht aus:

Mitteln zur Erfassung eines überlasteten Etikettvermittlungswegs in einem der beiden optischen Burstvermittlungsknoten;
Mittel zur Bewertung einer Gruppe gemeinsamer Wellenlängen (714) in einem der beiden optischen Burstvermittlungsknoten, die dem überlasteten Etikettvermittlungsweg zugeordnet ist;
Mittel zur Identifizierung eines Etikettvermittlungswegs in einem der beiden optischen Burstvermittlungsknoten, dem eine Gruppe gemeinsamer Wellenlängen (711, 712, 713) zugeordnet ist, die Überschneidungen mit der Gruppe gemeinsamer Wellenlängen (714) aufweist, die dem überlasteten Etikettvermittlungsweg zugeordnet ist; und
Mittel zur Nutzung des Etikettvermittlungswegs in einem der beiden optischen Burstvermittlungsknoten als Etikettvermittlungsweg, der möglicherweise an der Überlastung beteiligt ist.

7. Die Vorrichtung aus Anspruch 6, wobei das Mittel zur Nutzung außerdem umfasst:

wobei der identifizierte Etikettvermittlungsweg als an der Überlastung beteiligt erachtet wird.

8. Die Vorrichtung aus Anspruch 6, wobei das Mittel zur Nutzung außerdem umfasst:

Mittel zu Ermittlung, ob eine Überschneidung zwischen der Gruppe gemeinsamer Wellenlängen (711, 712, 713), die dem identifizierten Etikettvermittlungsweg zugeordnet ist, und der Gruppe gemeinsamer Wellenlängen (714), die dem überlasteten Etikettvermittlungsweg zugeordnet ist, einen vordefinierten Grenzwert überschreitet;

wobei der identifizierte Etikettvermittlungsweg als an der Überlastung beteiligt erachtet wird, wenn die Überschneidung den vordefinierten Grenzwert überschreitet.

9. Die Vorrichtung aus Anspruch 7 oder Anspruch 8, wobei der identifizierte Etikettvermittlungsweg, der als an der Überlastung beteiligt erachtet wird, in einen Überlastregelungsalgorithmus einbezogen wird.

10. Die Vorrichtung aus Anspruch 6, wobei der identifizierte Etikettvermittlungsweg in einen Überlastregelungsalgorithmus einbezogen wird.

**Revendications**

1. Procédé permettant d'identifier des chemins commutés par étiquette participant à la congestion dans un réseau optique, dans lequel le réseau optique comprend au moins deux noeuds de commutation optique en rafale,
**caractérisé en ce que**
le réseau optique utilise des groupes de longueurs d'ondes partagées (472), dans lequel chaque groupe de longueurs d'ondes partagées est associé à l'un des chemins commutés par étiquette entre les deux noeuds (404) et dans lequel chaque groupe de longueurs d'ondes partagées comprend un ensemble de longueurs d'ondes (420) destiné à être utilisé par l'un des chemins commutés par étiquette entre les deux noeuds,
le procédé comprenant les étapes de :

détection au niveau de l'un des deux noeuds de commutation optique en rafale un chemin commuté par étiquette congestionné ;
évaluer au niveau de l'un des deux noeuds de commutation optique en rafale un groupe de longueurs d'ondes partagées (714) associé au chemin commuté par étiquette congestionné ;
identifier au niveau des deux noeuds de commutation optique en rafale un chemin commuté par étiquette auquel est associé en conséquence un groupe de longueurs d'ondes partagées (711, 712, 713) qui chevauche le groupe de longueurs d'ondes partagées (714) associé au chemin commuté par étiquette congestionné ; et

utiliser au niveau des deux noeuds de commutation optique en rafale le chemin commuté par étiquette identifié comme chemin commuté par étiquette participant probablement à la congestion.

2. Procédé selon la revendication 1, dans lequel l'étape d'utilisation comprend en outre :

l'endroit où le chemin commuté par étiquette est considéré participer à la congestion.

3. Procédé selon la revendication 1, dans lequel l'étape d'utilisation comprend en outre l'étape de :

détermination si un chevauchement entre le groupe de longueurs d'ondes partagées (711, 712, 713) associé au chemin commuté par étiquette identifié et le groupe de longueurs d'ondes partagées (714) associé au chemin commuté par étiquette congestionné dépasse une valeur seuil prédéterminée ;

dans lequel si le chevauchement dépasse la valeur seuil prédéterminée, le chemin commuté par étiquette identifié est considéré participer à la congestion.

4. Procédé selon la revendication 2 ou 3, dans lequel le chemin commuté par étiquette identifié considéré participer à la congestion est inclus dans un algorithme de contrôle de la congestion.

5. Procédé selon la revendication 1, dans lequel le chemin commuté par étiquette identifié est inclus dans un algorithme de contrôle de la congestion.

6. Appareil permettant d'identifier les chemins commutés par étiquette participant à la congestion dans un réseau optique, dans lequel le réseau optique comprend au moins deux noeuds de commutation optique en rafale,
**caractérisé en ce que**
le réseau optique utilise des groupes de longueurs d'ondes partagées (422), dans lequel chaque groupe de longueurs d'ondes partagées est associé à l'un des chemins commutés par étiquette entre les deux noeuds (404) et dans lequel chaque groupe de longueurs d'ondes partagées comprend un ensemble de longueurs d'ondes (420) destiné à être utilisé par l'un des chemins commutés par étiquette entre les deux noeuds,
l'appareil comprenant :

des moyens permettant de détecter au niveau de l'un des deux noeuds de commutation optique en rafale un chemin commuté par étiquette congestionné ;
des moyens permettant d'évaluer au niveau des deux noeuds de commutation optique en rafale un groupe de longueurs d'ondes partagées (714) associé au chemin commuté par étiquette congestionné ;
des moyens permettant d'identifier au niveau de l'un des deux noeuds de commutation optique en rafale un chemin commuté par étiquette auquel est associé un groupe de longueurs d'ondes partagées (711, 712, 713) qui chevauche le groupe de longueurs d'ondes partagées (714) associé au chemin commuté par étiquette congestionné ; et
des moyens destinés à être utilisés au niveau de l'un des dess deux noeuds de commutation optique en rafale le chemin commuté par étiquette identifié comme chemin commuté par étiquette participant probablement à la congestion.

7. Appareil selon la revendication 6, dans lequel les moyens destinés à être utilisés comprennent en outre :

l'endroit où le chemin commuté par étiquette identifié est considéré participer à la congestion.

8. Appareil selon la revendication 6, dans lequel les moyens destinés à être utilisés comprennent en outre :

des moyens permettant de déterminer si un chevauchement entre le groupe de longueurs d'ondes partagées (711, 712, 713) associé au chemin commuté par étiquette identifié et le groupe de longueurs d'ondes partagées (714) associé au chemin commuté par étiquette congestionné dépasse une valeur seuil prédéterminée ;

dans lequel si le chevauchement dépasse la valeur seuil prédéterminée, le chemin commuté par étiquette identifié est considéré participer à la congestion.

9. Appareil selon la revendication 7 ou 8, dans lequel le chemin commuté par étiquette identifié considéré participer à la congestion est inclus dans un algorithme de contrôle de la congestion.

10. Appareil selon la revendication 6, dans lequel le chemin commuté par étiquette identifié est inclus dans un algorithme de contrôle de la congestion.

**FIG. 1**

**FIG. 2**

*FIG. 3*

400

404c   404D

402   406

412a   412a

408a   412b

412b   404A   408c

410   404B

408b

**FIG. 4A**

410   422a

422B

412a   420

412b   420

420

**FIG. 4B**

**FIG. 5A**

**FIG. 5B**

FIG. 6

FIG. 7A

FIG. 7B

FIG. 7C

*802A*
*802B*
OBS
*802D*
*802E* *802F*
*802C*
*800*

**FIG. 8**

*900*

Event A

Event B

Event A

Eponential Burst
Arrival = 1.0

*902*
ON
Event B
OFF
*904*
Eponential
Burst Arrival = 0

Event
C
Event D

Event D

Event D

IDLE
*906*

Events:
A - p=0.5 / (ON State Sitting Time Expired)
B - p=0.5 / (OFF State Sitting Time Expired)
C - 20 sec. ON/OFF time Expired
D - p=0.5 / (20 sec. IDLE time Expired)

**FIG. 9**

**FIG. 10**

**FIG. 11**

**FIG. 12**

**FIG. 13**